# EUROPEAN PATENT SPECIFICATION

(11) **EP 4 461 797 B1**
(45) Date of publication and mention of the grant of the patent: **08.04.2026**
(21) Application number: 23864833.1
(22) Date of filing: 31.10.2023
(51) Int. Cl.: C12C 12/00, C12H 1/22, C12C 11/11, C12C 7/04, C12C 7/20, C12H 1/07, C12C 11/00

(54) **WHOLE-WHEAT BARREL-AGED STRONG LAGER BEER AND PREPARATION PROCESS THEREFOR**
DURCH VOLLWEIZENFASS GEALTERTES STARKES LAGER-BIER UND HERSTELLUNGSVERFAHREN DAFÜR
BIÈRE BLONDE FORTE DE BLÉ ENTIER VIEILLIE EN FÛT ET SON PROCÉDÉ DE PRÉPARATION

(30) Priority: 29.12.2022 CN 202211703100
(43) Date of publication of application: 13.11.2024
(73) Proprietor: Tsingtao Brewery Co., Ltd., Shibei District Qingdao, Shandong 266000 (CN)
(72) Inventor: HUANG, Kexing, Qingdao, Shandong 266000 (CN); JIANG, Zongxiang, Qingdao, Shandong 266000 (CN); YIN, Hua, Qingdao, Shandong 266000 (CN); DONG, Jianjun, Qingdao, Shandong 266000 (CN); XING, Lei, Qingdao, Shandong 266000 (CN); MENG, Qingshang, Qingdao, Shandong 266000 (CN); LIU, Guangfeng, Qingdao, Shandong 266000 (CN); ZHANG, Wenduo, Qingdao, Shandong 266000 (CN); CHANG, Zongming, Qingdao, Shandong 266000 (CN); YANG, Zhaoxia, Qingdao, Shandong 266000 (CN); HE, Yang, Qingdao, Shandong 266000 (CN); CHEN, Rong, Qingdao, Shandong 266000 (CN); LIU, Mingli, Qingdao, Shandong 266000 (CN); HU, Shumin, Qingdao, Shandong 266000 (CN)
(74) Representative: J A Kemp LLP
(86) International application number: PCT/CN2023/128403
(87) International publication number: WO 2024/056105

(56) References cited:
- CN-A- 110 331 061
- CN-A- 111 676 100
- CN-A- 113 999 740
- CN-A- 115 926 908
- GB-A- 2 420 349
- COELHO EDUARDO ET AL: "Volatile fingerprinting differentiates diverse-aged craft beers", LWT- FOOD SCIENCE AND TECHNOLOGY, vol. 108, 20 March 2019 (2019-03-20), pages 129 - 136, XP085667837, ISSN: 0023-6438, DOI: 10.1016/J.LWT.2019.03.044
- YU WEI: "Effect of Oak Wood on the Quality of Beer", no. 13, 31 December 2017 (2017-12-31), pages 56 - 63, XP093148049, Retrieved from the Internet <URL:https://oversea.cnki.net/KCMS/detail/detail.aspx?dbcode=CJFD&dbname=CJFDLAST2018&filename=PJKJ201713015&uniplatform=OVERSEA&v=mGO1J05M88ntVLLZiqi4-LMD6ztu_V0uTjOLLkym-3mMotzypPjPjBMYFmLh10Nk>
- ANONYMOUS FURANEOL: "Furaneol - Wikipedia", 27 August 2022 (2022-08-27), pages 1 - 3, XP093275630, Retrieved from the Internet <URL:https://en.wikipedia.org/w/index.php?title=Furaneol&oldid=1107033768>
- KAN XIN: "Preliminary Study of High Alcohol Beer", MASTER'S THESIS, 1 June 2012 (2012-06-01), XP093148043
- YU WEI: "Effect of Oak Wood on the Quality of Beer", GLOBAL ALCINFO BEERTECH, no. 13, 31 December 2017 (2017-12-31), pages 56 - 63, XP093148049
- CUI YUN-QIAN, SHI-XIONG WEI: "Effect of Oak Barrel Aging on the Quality of Beer", vol. 37, no. 9, 31 December 2017 (2017-12-31), pages 230 - 234, XP093148052

## Description

### TECHNICAL FIELD

The present application belongs to the technical field of beer brewing, and in particular relates to a whole-malt barrel-aged strong lager beer and a preparation process therefor.

### BACKGROUND ART

In recent years, there has a significant consumption upgrade in beer market of China, with imported beer, craft beer and other categories of products continuing to develop, high-end products gradually gaining volume and accounted for about 35% of the market share in 2020 (Note: Euromonitor data divides economy, mid-range and high-end beer by market retail price) with higher price and more differentiated flavors. In mature markets like the United States, high-end beer sales accounted for more than 1/3 of the total sales in 2020, which is nearly 50% of the market share. The proportion of high-end and ultra-high-end products in the global beer market has increased year by year, and this trend is expected to continue.

At present, the alcohol content of beer products on the domestic market generally ranges from 3%vol to 6%vol. There are only a few strong beers with an alcohol content of 8%vol to 12%vol, and all of them are ale beers fermented at high temperature. There is no strong lager with an alcohol content ≥10%vol. Compared with ordinary beers, strong beer has a higher alcohol content, richer flavor, and longer shelf life, and is an important direction for the development of high-end beers. Therefore, how to develop strong lager beer with rich flavor, complex taste, and long shelf life through process technology innovation under the premise of the alcohol content ≥10%vol has become a challenge for the innovation of high-alcohol beer.

COELHO EDUARDO et al. disclose a method of volatile fingerprinting to differentiate diverse-aged craft beers in "Volatile fingerprinting differentiates diverse-aged craft beers", LWT- FOOD SCIENCE AND TECHNOLOGY, vol. 108, pages 129-136, XP085667837, ISSN: 0023-6438, DOI: 10.1016/J.LWT.2019.03.044.

Yu Wei et al. studied the effect of French oak chips on lager beer in "Effect of Oak Wood on the Quality of Beer", Global Alcinfo Beertech, no. 13, 31 December 2017 (2017-12-31), pages 56-63, XP093148049.

CN111676100A discloses a method for preparing ultrahigh-gravity beer from ultrahigh-gravity wort.

CN110331061A discloses a preparation method of strong barley beer having whisky style and beer obtained by preparation method.

### SUMMARY

In view of at least one shortcoming in the prior art, the present application provides a whole-malt barrel-aged strong lager beer and a preparation process thereof.

A first aspect of the present application provides a whole-malt barrel-aged strong lager beer, wherein the whole-malt barrel-aged strong lager beer has an alcohol content of 10%vol-12%vol, a bitterness unit of 20 BU-60 BU, an original extract of 22 °P-25 °P, a real degree of fermentation ≥70%, a carbon dioxide content of 0.50% mass-0.65% mass, a dimethylhydroxy furanone content of 4 mg/L-6 mg/L, a cis-oak lactone content of 300 µg/L-500 µg/L, a vanillin content of 10 mg/L-20 mg/L, and an amber appearance.

In some embodiments of the first aspect, the whole-malt barrel-aged strong lager beer uses Pilsner malt as a main ingredient, and also uses one or a combination of at least two of Munich malt, crystal malt, chocolate malt and dark malt, without using any auxiliary materials.

A second aspect of the present application provides a preparation process of the whole-malt barrel-aged strong lager beer according to any embodiment of the first aspect, comprising steps of: aging a whole-malt strong lager beer in an oak barrel after obtaining the whole-malt strong lager beer, and performing filtration, carbonation, stabilization and bottling of barrel-aged beer after aging.

In some embodiments of the second aspect, an oak barrel made of American white oak is used for aging, a temperature of a barrel aging cellar is 0°C-5°C, a humidity of the barrel aging cellar is 30%-50%, and a barrel aging time is determined to achieve an optimal level of oak barrel flavor substances, wherein the optimal level of oak barrel flavor substances refers to a dimethylhydroxy furanone content of 4 mg/L-6 mg/L, a cis-oak lactone content of 300 µg/L-500 µg/L, and a vanillin content of 10 mg/L-20 mg/L.

In some embodiments of the second aspect, airborne microbe content in the barrel aging cellar is controlled to be ≤500 cuf/m², so as to establish a high-purification barrel aging cellar environment suitable for lager beer.

In some embodiments of the second aspect, the barrel-aged beer is filtered by stacked membrane filtration, turbidity is required to be controlled below 1 EBC, and the barrel-aged beer is bottled by an isobaric filling machine.

In some embodiments of the second aspect, the stacked membrane filtration uses a laminated filter made of 100% high-purification polypropylene membrane for filtration, and filtration accuracy is 0.7-1.0µm.

In some embodiments of the second aspect, carbon dioxide is filled twice during the carbonation, a carbon dioxide content is controlled at 0.60% mass-0.65% mass, and dissolved oxygen is controlled between 20 ppb-40 ppb.

In some embodiments of the second aspect, during the stabilization, stabilization pressure is 1.5-2 bar, and stabilization time is 24-48 hours.

In some embodiments of the second aspect, the whole-malt strong lager beer is prepared by following methods:
milling malts by dry milling or wet milling and then mixing milled malts with water, performing saccharification, filtration and boiling to obtain wort, and adding hops three times during the boiling;
whirlpooling, cooling and oxygenating the wort, and transferring the wort to a fermenter to ferment with lager yeast, and then filtered with kieselguhr to obtain the whole-malt strong lager beer.

In some embodiments of the second aspect, the saccharification is a two-stage saccharification, wherein a first stage saccharification is carried out at 62-65° C for 30-60 min, and a second stage saccharification is carried out at 71-73° C for 10-30 min.

In some embodiments of the second aspect, the hops are European noble hops selected from one or a combination of at least two of Saaz, Sladke, Hallertau Mittelfrüh, Hallertau Tradition, Hallertauer Magnum, Hersbrucker Spät, Perle, Saphir, Spalter Select, Tettnang.

In some embodiments of the second aspect, during fermentation process of adding the lager yeast, a pitching rate is controlled at 30-40 million/mL, a main fermentation temperature is 8-13°C, a maturation temperature is 13-16°C, and a cold storage time is ≥15 days.

Compared with the prior art, the advantages and positive effects of the present application are as follows:
the present application provides a whole-malt barrel-aged strong lager beer based on the adjustments of wort preparation, beer fermentation and barrel aging, with an alcohol content of 10% vol-12% vol, bitterness unit of 20 BU-60 BU, RDF≥70%, original extract of 22 °P-25 °P, carbon dioxide content of 0.50 %mass-0.65 %mass, dimethylhydroxy furanone (DMHF) content of 4 mg/L-6 mg/L, cis-oak lactone content of 300 µg/L-500 µg/L, vanillin content of 10 mg/L-20 mg/L, amber appearance, with flavors of vanilla, coconut, mellow, ester and the like, and at the same time with the flavors of both beer and whiskey, with tastes of strong and rich, complex layers, and a long aftertaste of wine aroma;
the whole-malt barrel-aged strong lager beer provided in the present application has a high alcohol content (≥10%vol) and, through process technology innovation, has been developed to have a rich flavor, blending the flavor substances in the barrel absorbed during barreling, with a complex flavor profile and strong layers of taste. It also breaks through the limits of alcohol content and storage time of the traditional beer, and achieves the difficult innovation challenge of high-alcohol beer.

### DETAILED DESCRIPTION OF EMBODIMENTS

The technical solutions in the embodiments of the present application will be described clearly and completely below. Apparently, the described embodiments are merely some but not all of the embodiments of the present application. Based on the embodiments of the present application, all other embodiments obtained by those of ordinary skill in the art without creative efforts shall fall within the protection scope of the present application.

In order to achieve the above-mentioned purpose, a first aspect of embodiments of the present application provides a whole-malt barrel-aged strong lager beer, wherein the whole-malt barrel-aged strong lager beer has an alcohol content of 10%vol-12%vol, a bitterness unit of 20 BU-60 BU, an original extract of 22 °P-25 °P, RDF≥70%, a carbon dioxide content of 0.50% mass-0.65% mass, a dimethylhydroxy furanone (DMHF) content of 4 mg/L-6 mg/L, a cis-oak lactone content of 300µg/L-500µg/L, a vanillin content of 10 mg/L-20 mg/L, and an amber appearance.

In some embodiments, the amber appearance of the whole-malt barrel-aged strong lager beer is 30-50 EBC.

In some embodiments, the whole-malt barrel-aged strong lager beer is mainly made of Pilsner malt (accounting for ≥80%), with one or a combination of at least two (accounting for≤20%) of Munich malt, crystal malt, chocolate malt and dark malt, and no auxiliary materials are used. The "auxiliary materials" mentioned here refer to raw materials other than malt with a higher starch content than malt, such as corn or rice.

A second aspect of the embodiments of the present application provides a preparation process of the whole-malt barrel-aged strong lager beer according to any one of the above technical solutions, comprising steps of aging a whole-malt strong lager beer in an oak barrel after obtaining the whole-malt strong lager beer, and performing filtration, carbonation, stabilization and bottling of the barrel-aged beer after aging. The purpose of stabilization is to saturate the carbon dioxide.

Lager beer is suitable for storage at low-temperature, and compared with ale beer, lager beer has a clean flavor and is more sensitive to oxygen and contaminating bacteria. However, barreling will inevitably lead to the possibility of oxygenation and contamination by contaminating bacteria, which will affect the flavor of the lager beer. Therefore, sour beer, which has high acidity and can reduce the invasion of contaminating bacteria, is currently the beer that mostly barrel-aged. However, as for lager beer, it is difficult to barrel for aging. In some embodiments of the preparation process of the whole-malt barrel-aged strong lager beer provided in the present application, the barreling process of lager beer is realized by establishing a high-purification barrel aging cellar and controlling the barrel aging temperature at low, thereby controlling the growth of contaminating bacteria. The specific technical solutions are as follows:
On the one hand, an oak barrel made of American white oak is used for aging, a temperature of the barrel aging cellar is 0°C-5°C, a humidity of the barrel aging cellar is 30%-50%, and a barrel aging time is determined to achieve an optimal level of oak barrel flavor substances. The optimal level of oak barrel flavor substances refers to the dimethylhydroxy furanone content reaching 4 mg/L-6 mg/L, the cis-oak lactone content reaching 300µg/L-500µg/L, and the vanillin content is in the range of 10 mg/L-20 mg/L. The specific barrel aging time may vary according to different external conditions such as temperature and humidity of the cellar.

On the other hand, a high-purification barrel aging cellar environment suitable for lager beer is established, and airborne microbe content in the barrel aging cellar is controlled to be ≤500 cuf/m². In the process of establishing the high-purification barrel aging cellar environment, methods such as sterile fresh air, ultraviolet sterilization and disinfection combined with space alcohol spraying sterilization can be used. Those skilled in the art can reasonably choose the desired sterilization method, as long as the airborne microbe content in the barrel aging cellar is controlled to be ≤500 cuf/m².

In some embodiments, the barrel-aged beer is filtered by stacked membrane filtration, turbidity is required to be controlled below 1 EBC, and the barrel-aged beer is bottled by an isobaric filling machine. Optionally, the stacked membrane filtration described in these embodiments may use a laminated filter made of 100% high-purification polypropylene membrane for filtration, and filtration accuracy is 0.7-1.0 µm.

In some embodiments, carbon dioxide is filled twice during the carbonation, the carbon dioxide content is controlled at 0.60% mass-0.65% mass, and the dissolved oxygen is controlled between 20 ppb-40 ppb. The whole-malt strong lager beer will cause carbon dioxide loss during the aging process in oak barrels. In order to increase the carbon dioxide content in the beer, carbon dioxide is filled twice after the beer is out of the barrel. There can be no time interval between the two carbon dioxide fillings, that is, the second filling is carried out immediately after the first filling is completed.

In the present application, the stabilization of barrel-aged beer after carbonation refers to maintaining the beer under a certain pressure for a period, so that the carbon dioxide can better combine with the molecules in the beer and improve the taste of the beer. In some embodiments, during the stabilization, stabilization pressure is 1.5-2 bar, and stabilization time is 24-48 hours, so that the carbon dioxide is saturated in the beer and the taste of the beer is improved.

In some embodiments, the whole-malt strong lager beer is prepared by the following methods:
milling malts by dry milling or wet milling at 65°C and then mixing the milled malts with water, performing saccharification, filtration and boiling to obtain wort; hops are added three times during the boiling;
cooling and oxygenating the wort, transferring the wort to a fermenter to ferment with lager yeast, and then filtered with kieselguhr to obtain the whole-malt strong lager beer. The obtained whole-malt strong lager beer has an alcohol content of 10%vol-12%vol, a bitterness unit of 20 BU-60 BU, an RDF≥70%, an original extract of 22 °P-25 °P, and a dimethylhydroxy furanone (hereinafter referred to as DMHF) content of 4 mg/L-6 mg/L.

In some embodiments, the saccharification is a two-stage saccharification, wherein a first stage saccharification is carried out at 62-65° C for 30-60 min, and a second stage saccharification is carried out at 71-73° C for 10-30 min.

In some embodiments, the hops are European noble hops selected from one or a combination of at least two of Saaz, Sladke, Hallertau Mittelfrüh, Hallertau Tradition, Hallertauer Magnum, Hersbrucker Spät, Perle, Saphir, Spalter Select, Tettnang Tettnanger.

In some embodiments, the boiling process takes 90-150 minutes from the beginning to the end of boiling, and adding hops three times during the boiling process, specifically comprises: adding the hops at the beginning of the boiling, 45 minutes before the end of boiling, and from 10 minutes before the end of the boiling to the end of the boiling.

In some embodiments, during the fermentation process of adding the lager yeast, a pitching rate is controlled at 30-40 million/mL, a main fermentation temperature is 8-13°C, a maturation temperature is 13-16°C, and a cold storage time is ≥15 days. It is understandable that during fermentation at ultra-high concentrations, yeast growth is easily subject to pressure from the external environment, such as high osmotic pressure, high viscosity, etc. These pressures will inhibit the growth of yeast, so the fermentation process should consider add conditions that promote yeast growth, such as increasing the pitching rate and increasing the fermentation temperature, and extending the cold storage time can allow the yeast to flocculate better under high viscosity and improve the purity of the wine.

Compared with the prior art, the advantages and positive effects of the present application are as follows:
the present application provides a whole-malt barrel-aged strong lager beer based on the adjustments of wort preparation, beer fermentation and barrel aging, with an alcohol content of 10% vol-12% vol, bitterness unit of 20 BU-60 BU, RDF≥70%, original extract of 22 °P-25 °P, carbon dioxide content of 0.50 %mass-0.65 %mass, dimethylhydroxy furanone (DMHF) content of 4 mg/L-6 mg/L, cis-oak lactone content of 300 µg/L-500 µg/L, vanillin content of 10 mg/L-20 mg/L, amber appearance, with flavors of vanilla, coconut, mellow, ester and the like, and at the same time with the flavors of both beer and whiskey, with tastes of strong and rich, complex layers, and a long aftertaste of wine aroma;
the whole-malt barrel-aged strong lager beer provided in the present application has a high alcohol content (≥10%vol) and, through process technology innovation, has been developed to have a rich flavor, blending the flavor substances in the barrel absorbed during barreling, with a complex flavor profile and strong layers of taste. It also breaks through the limits of alcohol content and storage time of the traditional beer, and achieves the difficult innovation challenge of high-alcohol beer.

The whole-malt barrel-aged strong lager beer and its preparation process will be described more clearly and in detail below in conjunction with specific embodiments.

### Embodiment 1

Pilsner malt (90%) was used as the main raw material, with crystal malt (5%), chocolate malt (3%), and dark malt (2%). The malts were milled by wet milling at 65°C, and then saccharification (the first stage saccharification was carried out at 63°C for 60 minutes, and the second stage saccharification was carried out at 72°C for 30 minutes), filtration and boiling (adding hops three times at the beginning, during the boiling process, and at the end of the boiling) were performed to obtain the wort;
the wort was whirlpooled, cooled and oxygenated (cold wort concentration was 22 °P), and was fermented with lager yeast (the pitching rate was 30 million/mL, the main fermentation temperature was 8°C and the maturation temperature was 13°C), and then was filtered with kieselguhr (turbidity≤0.5EBC) to obtain a whole-malt strong lager beer (alcohol content was 10%vol and dimethylhydroxy furanone (DMHF) content was 6mg/L);
the whole-malt strong lager beer was aged in oak barrels made of American white oak (cellar temperature was 0°C, cellar humidity was 50%, after 5 months of barrel aging, the cis-oak lactone content was 300 µg/L-350 µg/L and the vanillin content was 10 mg/L-15 mg/L in the barrel-aged beer). After aging, the barrel-aged beer was filtered by stacked membrane filtration (turbidity ≤ 0.5EBC), carbonized (carbon dioxide content was 0.65% mass, dissolved oxygen was controlled between 20 ppb-40 ppb), and bottled after stabilization.

### Embodiment 2

Pilsner malt (90%) was used as the main raw material, with Munich malt (5%), crystal malt (3%), and chocolate malt (2%). The malts were milled by dry milling, and then saccharification (the first stage saccharification was carried out at 65°C for 60 minutes, and the second stage saccharification was carried out at 72°C for 20 minutes), filtration and boiling (adding hops three times at the beginning, during the boiling process, and at the end of the boiling) were performed to obtain the wort;
the wort was whirlpooled, cooled and oxygenated (cold wort concentration was 23°P), and was fermented with lager yeast (the pitching rate was 35 million/mL, the main fermentation temperature was 10°C, the maturation temperature was 14°C), and then was filtered with kieselguhr (turbidity≤0.5EBC) to obtain a whole-malt strong lager beer (alcohol content was 11%vol and dimethylhydroxy furanone (DMHF) content was 5mg/L);
the whole-malt strong lager beer was aged in oak barrels made of American white oak (cellar temperature was 3°C, cellar humidity was 40%, after 6 months of barrel aging, the cis-oak lactone content was 350 µg/L-400 µg/L and the vanillin content was 10 mg/L-15 mg/L in the barrel-aged beer). After aging, the barrel-aged beer was filtered by stacked membrane filtration (turbidity ≤ 0.5EBC), carbonized (carbon dioxide content was 0.65% mass, dissolved oxygen was controlled between 20 ppb-40 ppb), and bottled after stabilization.

### Embodiment 3

Pilsner malt (90%) was used as the main raw material, with Munich malt (8%) and crystal malt (2%). The malts were milled by wet milling at 65°C, and then saccharification (the first stage saccharification was carried out at 65°C for 60 minutes, and the second stage saccharification was carried out at 73°C for 30 minutes), filtration and boiling (adding hops three times at the beginning, during the boiling process, and at the end of the boiling) were performed to obtain the wort;
the wort was whirlpooled, cooled and oxygenated (cold wort concentration 25 °P), and was fermented with lager yeast (the pitching rate was 40 million/mL, the main fermentation temperature was 13°C, and the maturation temperature was 15°C), and then was filtered with kieselguhr (turbidity ≤ 0.5EBC) to obtain a whole-malt strong lager beer (alcohol content was 12%vol and dimethylhydroxy furanone (DMHF) content was 4mg/L);
the whole-malt strong lager beer was aged in oak barrels made of American white oak (cellar temperature was 3°C, cellar humidity was 40%, after 1 year of barrel aging, the cis-oak lactone content was 400 µg/L-500 µg/L and the vanillin content was 15mg/L-20 mg/L in the barrel-aged beer). After aging, the barrel-aged beer was filtered by stacked membrane filtration (turbidity ≤ 0.5EBC), carbonized (carbon dioxide content was 0.65% mass, dissolved oxygen was controlled between 20 ppb-40 ppb), and bottled after stabilization.

### Comparative Example 1

The preparation method of whole-malt strong lager was the same as that of Embodiment 3;
The difference is that the whole-malt strong lager beer was aged in oak barrels made of American white oak (aging temperature was room temperature 20-25° C, aging humidity was 60-80%, and aging time was the same as that in Embodiment 1), and after aging, the barrel-aged beer was filtered by stacked membrane filtration (turbidity ≤ 0.5EBC), carbonized (carbon dioxide 0.65% mass, dissolved oxygen was controlled between 20ppb-40ppb), and bottled after stabilization.

### Comparative Example 2

The preparation method of whole-malt strong lager was the same as that of Embodiment 3;
The difference is that the whole-malt strong lager had a 65% fermentation degree;
The aging method of the whole-malt strong lager was the same as that in Embodiment 3.

### Comparative Example 3

The preparation method of whole-malt strong lager was the same as that of Example 3;
The difference is that the whole-malt strong lager was aged in oak barrels made from European oak.

### Physical and chemical testing of whole-malt barrel-aged strong lager beer

**Table 1 Physical and chemical testing results and flavor evaluation results of whole-malt barrel-aged strong lager beer prepared in the Embodiments and Comparative Examples**

| index | unit | Embodiment 1 | Embodiment 2 | Embodiment 3 | Comparative Example 1 | Comparative Example 2 | Comparative Example 3 |
|---|---|---|---|---|---|---|---|
| Original extract | °P | 22 | 23 | 25 | 25 | 25 | 25 |
| Alcohol content | % vol | 10 | 11 | 12 | 11.5 | 11 | 12 |
| RDF | % | 70 | 70 | 71 | 71 | 65 | 71 |
| Bitterness unit | BU | 20 | 30 | 40 | 40 | 60 | 50 |
| Dimeth ylhydro xy furanone (DMHF) | mg/ L | 6 | 5 | 4 | 5 | 4 | 4 |
| Cis-oak lactone content | µg/ L | 326 | 383 | 497 | 560 | 436 | 268 |
| Vanillin content | mg/ L | 10 | 14 | 19 | 18 | 15 | 12 |
| Flavor evaluation | / | It has flavors of vanilla, coconut, mellow, ester, etc., and tastes of strong and rich, complex layers, and a long aftertaste of wine aroma. It has the flavors of both beer and whiskey. | It has flavors of vanilla, coconut, mellow, ester, etc., and tastes of strong and rich, complex layers, and a long aftertaste of wine aroma. It has the flavors of both beer and whiskey. | It has flavors of vanilla, coconut, mellow, ester, etc., and tastes of strong and rich, complex layers, and a long aftertaste of wine aroma. It has the flavors of both beer and whiskey. | Rich oak flavors such as vanilla and coconut, with obvious mellow and ester, and a strong and rich taste, but the overall flavor harmony is poor and there is a sour taste. | It has flavors of vanilla, coconut, mellow, ester, etc., and tastes of strong and rich, complex layers, and a long aftertaste of wine aroma. It has the flavors of both beer and whiskey. But the aftertaste is sweet and the alcohol content is slightly lower. | It has oak flavors such as vanilla, coconut, roasted nuts, mellow, ester, etc., and tastes of strong and rich, complex layers, and a long aftertaste of wine aroma. However, the oak flavor is weak, with a slightly astringent aftertaste, and there is a sense of astringency of tannins, and the overall harmony is not good. |

## Claims

1. A whole-malt barrel-aged strong lager beer, **characterized in that**, the whole-malt barrel-aged strong lager beer has an alcohol content of 10%vol-12%vol, a bitterness unit of 20 BU-60 BU, an original extract of 22 °P-25 °P, a real degree of fermentation ≥70%, a carbon dioxide content of 0.50% mass-0.65% mass, a dimethylhydroxy furanone content of 4 mg/L-6 mg/L, a cis-oak lactone content of 300 µg/L-500 µg/L, a vanillin content of 10 mg/L-20 mg/L, and an amber appearance.

2. The whole-malt barrel-aged strong lager beer according to claim 1, **characterized in that**, the whole-malt barrel-aged strong lager beer uses Pilsner malt as a main ingredient, and also uses one or a combination of at least two of Munich malt, crystal malt, chocolate malt and dark malt, without using any auxiliary materials.

3. A preparation process of the whole-malt barrel-aged strong lager beer according to claim 1 or 2, comprising steps of: aging a whole-malt strong lager beer in an oak barrel after obtaining the whole-malt strong lager beer, and performing filtration, carbonation, stabilization and bottling of barrel-aged beer after aging.

4. The preparation process according to claim 3, **characterized in that**, an oak barrel made of American white oak is used for aging, a temperature of a barrel aging cellar is 0°C-5°C, a humidity of the barrel aging cellar is 30%-50%, and a barrel aging time is determined to achieve an optimal level of oak barrel flavor substances, wherein the optimal level of oak barrel flavor substances refers to a dimethylhydroxy furanone content of 4 mg/L-6 mg/L, a cis-oak lactone content of 300 µg/L-500 µg/L, and a vanillin content of 10 mg/L-20 mg/L.

5. The preparation process according to claim 4, **characterized in that**, airborne microbe content in the barrel aging cellar is controlled to be ≤500 cuf/m², so as to establish a high-purification barrel aging cellar environment suitable for lager beer.

6. The preparation process according to claim 3, **characterized in that**, the barrel-aged beer is filtered by stacked membrane filtration, turbidity is required to be controlled below 1 EBC, and the barrel-aged beer is bottled by an isobaric filling machine.

7. The preparation process according to claim 6, **characterized in that**, the stacked membrane filtration uses a laminated filter made of 100% high-purification polypropylene membrane for filtration, and filtration accuracy is 0.7-1.0µm.

8. The preparation process according to claim 3, **characterized in that**, carbon dioxide is filled twice during the carbonation, a carbon dioxide content is controlled at 0.60% mass-0.65% mass, and dissolved oxygen is controlled between 20 ppb-40 ppb.

9. The preparation process according to claim 3, **characterized in that**, during the stabilization, stabilization pressure is 1.5-2 bar, and stabilization time is 24-48 hours.

10. The preparation process according to claim 3, **characterized in that**, the whole-malt strong lager beer is prepared by following methods:
milling malts by dry milling or wet milling and then mixing milled malts with water, performing saccharification, filtration and boiling to obtain wort, and adding hops three times during the boiling;
whirlpooling, cooling and oxygenating the wort, and transferring the wort to a fermenter to ferment with lager yeast, and then filtered with kieselguhr to obtain the whole-malt strong lager beer.

11. The preparation process according to claim 10, **characterized in that**, the saccharification is a two-stage saccharification, wherein a first stage saccharification is carried out at 62-65° C for 30-60 min, and a second stage saccharification is carried out at 71-73° C for 10-30 min.

12. The preparation process according to claim 10, **characterized in that**, the hops are European noble hops selected from one or a combination of at least two of Saaz, Sladke, Hallertau Mittelfrüh, Hallertau Tradition, Hallertauer Magnum, Hersbrucker Spät, Perle, Saphir, Spalter Select, Tettnang.

13. The preparation process according to claim 10, **characterized in that**, during fermentation process of adding the lager yeast, a pitching rate is controlled at 30-40 million/mL, a main fermentation temperature is 8-13°C, a maturation temperature is 13-16°C, and a cold storage time is ≥15 days.

## Patentansprüche

1. In Fässern gereiftes starkes Lagerbier aus Vollmalz, **dadurch gekennzeichnet, dass** das in Fässern gereifte starke Lagerbier aus Vollmalz einen Alkoholgehalt von 10 Vol.-%-12 Vol.-%, eine Bittereinheit von 20 BU-60 BU, eine Stammwürze von 22 °P-25 °P, einen tatsächlichen Gärungsgrad von ≥70 %, einen Kohlendioxidgehalt von 0,50 Masse-%-0,65 Masse-%, einen Dimethylhydroxyfuranongehalt von 4 mg/1-6 mg/l, einen cis-Eichenlaktongehalt von 300 µg/1-500 µg/l, einen Vanillingehalt von 10 mg/1-20 mg/l und ein bernsteinfarbenes Aussehen aufweist.

2. In Fässern gereiftes starkes Lagerbier aus Vollmalz nach Anspruch 1, **dadurch gekennzeichnet, dass** das in Fässern gereifte starke Lagerbier aus Vollmalz Pilsner Malz als Hauptzutat verwendet und außerdem eine oder eine Kombination aus wenigstens zwei von Münchner Malz, Kristallmalz, Schokoladenmalz und dunklem Malz, ohne Verwendung von Hilfsstoffen, verwendet.

3. Vorgang zum Herstellen des in Fässern gereiften starken Lagerbiers aus Vollmalz nach Anspruch 1 oder 2, umfassend die Schritte: Reifen eines starken Lagerbiers aus Vollmalz in einem Eichenfass nach Erhalten des starken Lagerbiers aus Vollmalz und Durchführen einer Filtration, Karbonisierung, Stabilisierung und Abfüllung des in Fässern gereiften Bieres nach dem Reifen.

4. Vorgang zum Herstellen nach Anspruch 3, **dadurch gekennzeichnet, dass** ein Eichenfass, das aus amerikanischer Weißeiche hergestellt ist, zum Reifen verwendet wird, eine Temperatur eines Fassreifekellers 0 °C-5 °C beträgt, eine Luftfeuchtigkeit des Fassreifekellers 30 %-50 % beträgt und eine Fassreifedauer bestimmt wird, um ein optimales Niveau an Eichenfassaromastoffen zu erreichen, wobei sich das optimale Niveau an Eichenfassaromastoffen auf einen Dimethylhydroxyfuranongehalt von 4 mg/1-6 mg/l, einen cis-Eichenlactongehalt von 300 µg/l-500 µg/l und einen Vanillingehalt von 10 mg/l-20 mg/l bezieht.

5. Vorgang zum Herstellen nach Anspruch 4, **dadurch gekennzeichnet, dass** der Gehalt an Mikroben in der Luft in dem Fassreifekeller auf ≤500 cuf/m² gesteuert wird, um eine hochreine Fassreifekellerumgebung zu schaffen, die für Lagerbier geeignet ist.

6. Vorgang zum Herstellen nach Anspruch 3, **dadurch gekennzeichnet, dass** das in Fässern gereifte Bier durch gestapelte Membranfiltration gefiltert wird, die Trübung unter 1 EBC gesteuert werden muss und das in Fässern gereifte Bier mit einer isobaren Abfüllmaschine abgefüllt wird.

7. Vorgang zum Herstellen nach Anspruch 6, **dadurch gekennzeichnet, dass** die gestapelte Membranfiltration ein laminiertes Filter, das aus 100 % hochreiner Polypropylenmembran hergestellt ist, für die Filtration verwendet und die Filtrationsgenauigkeit 0,7-1,0 µm beträgt.

8. Vorgang zum Herstellen nach Anspruch 3, **dadurch gekennzeichnet, dass** während der Karbonisierung zweimal Kohlendioxid eingefüllt wird, ein Kohlendioxidgehalt auf 0,60 Masse-%-0,65 Masse-% gesteuert wird und der gelöste Sauerstoff zwischen 20 ppb-40 ppb gesteuert wird.

9. Vorgang zum Herstellen nach Anspruch 3, **dadurch gekennzeichnet, dass** während der Stabilisierung der Stabilisierungsdruck 1,5-2 bar beträgt und die Stabilisierungszeit 24-48 Stunden beträgt.

10. Vorgang zum Herstellen nach Anspruch 3, **dadurch gekennzeichnet, dass** das starke Lagerbier aus Vollmalz nach folgenden Verfahren hergestellt wird:
Mahlen von Malz durch Trocken- oder Nassmahlen und anschließendes Mischen des gemahlenen Malzes mit Wasser, Durchführen einer Verzuckerung, Filtration und von Kochen, um Würze zu erhalten, und dreimaliges Hinzufügen von Hopfen während des Kochens;
Wirbeln, Kühlen und Anreichern mit Sauerstoff der Würze und Überführen der Würze in einen Gärbehälter, um sie mit Lagerhefe zu vergären, und anschließendes Filtern mit Kieselgur, um das starke Lagerbier aus Vollmalz zu erhalten.

11. Vorgang zum Herstellen nach Anspruch 10, **dadurch gekennzeichnet, dass** die Verzuckerung eine zweistufige Verzuckerung ist, wobei eine erste Verzuckerungsstufe bei 62-65 °C für 30-60 Minuten ausgeführt wird und eine zweite Verzuckerungsstufe bei 71-73 °C für 10-30 Minuten durchgeführt wird.

12. Vorgang zum Herstellen nach Anspruch 10, **dadurch gekennzeichnet, dass** die Hopfen europäische noble Hopfen sind, ausgewählt aus einem oder einer Kombination von wenigstens zwei von Saaz, Sladke, Hallertau Mittelfrüh, Hallertau Tradition, Hallertauer Magnum, Hersbrucker Spat, Perle, Saphir, Spalter Select, Tettnang.

13. Vorgang zum Herstellen nach Anspruch 10, **dadurch gekennzeichnet, dass** während des Gärungsvorgangs des Hinzufügens von Lagerhefe, eine Anstellrate auf 30-40 Million/ml gesteuert wird, eine Hauptgärungstemperatur 8-13 °C beträgt, eine Reifungstemperatur 13-16 °C beträgt und eine Kaltlagerungszeit ≥15 Tagen liegt.

## Revendications

1. Bière blonde forte au malt entier vieillie en fût, **caractérisée en ce que** la bière blonde forte au malt entier vieillie en fût a une teneur en alcool de 10 % en volume à 12 % en volume, une unité d'amertume de 20 BU à 60 BU, un extrait initial de 22 °P à 25 °P, un degré réel de fermentation ≥ 70 %, une teneur en dioxyde de carbone de 0,50 % en masse à 0,65 % en masse, une teneur en diméthylhydroxy furanone de 4 mg/L à 6 mg/L, une teneur en cis-oak lactone de 300 µg/L à 500 µg/L, une teneur en vanilline de 10 mg/L à 20 mg/L, et un aspect ambré.

2. Bière blonde forte au malt entier vieillie en fût selon la revendication 1, **caractérisée en ce que** la bière blonde forte au malt entier vieillie en fût utilise du malt Pilsner comme ingrédient principal, et utilise également l'un ou une combinaison d'au moins deux malts parmi le malt Munich, le malt crystal, le malt chocolat et le malt foncé, sans utiliser aucun matériau auxiliaire.

3. Procédé de préparation de la bière blonde forte au malt entier vieillie en fût selon la revendication 1 ou 2, comprenant les étapes consistant à : faire vieillir une bière blonde forte au malt entier dans un fût de chêne après obtention de la bière blonde forte au malt entier, et réaliser la filtration, la carbonatation, la stabilisation et la mise en bouteille de la bière vieillie en fût après vieillissement.

4. Procédé de préparation selon la revendication 3, **caractérisé en ce qu'**un fût de chêne constitué de chêne blanc américain est utilisé pour le vieillissement, une température de la cave de vieillissement en fût est de 0 °C à 5 °C, une humidité de la cave de vieillissement en fût est de 30 % à 50 %, et une durée de vieillissement en fût est déterminée de sorte à obtenir un niveau optimal de substances aromatiques de fût de chêne, dans lequel le niveau optimal de substances aromatiques de fût de chêne correspond à une teneur en diméthylhydroxy furanone de 4 mg/L à 6 mg/L, une teneur en cis-oak lactone de 300 µg/L à 500 µg/L, et une teneur en vanilline de 10 mg/L à 20 mg/L.

5. Procédé de préparation selon la revendication 4, **caractérisé en ce que** la teneur en microbes en suspension dans l'air de la cave de vieillissement en fût est régulée à ≤ 500 cuf/m², afin d'établir un environnement de cave de vieillissement en fût hautement purifié adapté à la bière blonde.

6. Procédé de préparation selon la revendication 3, **caractérisé en ce que** la bière vieillie en fût est filtrée par filtration membranaire superposée, la turbidité doit être régulée en dessous de 1 EBC, et la bière vieillie en fût est mise en bouteille par une machine de remplissage isobare.

7. Procédé de préparation selon la revendication 6, **caractérisé en ce que** la filtration membranaire superposée utilise un filtre stratifié composé à 100 % d'une membrane en polypropylène de haute purification pour la filtration, et la précision de filtration est de 0,7 à 1,0 µm.

8. Procédé de préparation selon la revendication 3, **caractérisé en ce que** le dioxyde de carbone est chargé deux fois pendant la carbonatation, une teneur en dioxyde de carbone est régulée à 0,60 % en masse à 0,65 % en masse, et l'oxygène dissous est régulé entre 20 ppb et 40 ppb.

9. Procédé de préparation selon la revendication 3, **caractérisé en ce que**, pendant la stabilisation, la pression de stabilisation est de 1,5 à 2 bar, et la durée de stabilisation est de 24 à 48 heures.

10. Procédé de préparation selon la revendication 3, **caractérisé en ce que** la bière blonde forte au malt entier est préparée par les méthodes suivantes :
le broyage de malts par broyage à sec ou broyage humide, puis le mélange des malts broyés avec de l'eau, à la réalisation de la saccharification, de la filtration et l'ébullition afin d'obtenir du moût, et l'ajout de cônes de houblon à trois reprises pendant l'ébullition,
le tourbillonnement, le refroidissement et l'oxygénation du moût, et le transfert du moût vers un fermenteur afin de le faire fermenter avec de la levure de bière blonde, puis la filtration avec de la terre de diatomées afin d'obtenir la bière blonde forte au malt entier.

11. Procédé de préparation selon la revendication 10, **caractérisé en ce que** la saccharification est une saccharification en deux étapes, dans lequel une saccharification de première étape est réalisée à 62 à 65 °C pendant 30 à 60 minutes, et une saccharification de deuxième étape est réalisée à 71 à 73 °C pendant 10 à 30 minutes.

12. Procédé de préparation selon la revendication 10, **caractérisé en ce que** le houblon est un houblon noble européen sélectionné parmi l'une ou une combinaison d'au moins deux variétés parmi Saaz, Sladke, Hallertau Mittelfriüh, Hallertau Tradition, Hallertauer Magnum, Hersbrucker Spät, Perle, Saphir, Spalter Select et Tettnang.

13. Procédé de préparation selon la revendication 10, **caractérisé en ce que**, pendant le procédé de fermentation consistant à ajouter la levure de bière blonde, une dose de levain est régulée à 30 à 40 millions/mL, une température de fermentation principale est de 8 à 13 °C, une température de maturation est de 13 à 16 °C, et une durée de stockage au froid est ≥ 15 jours.
